# EUROPÄISCHE PATENTANMELDUNG

(11) **EP 1 555 597 A1**
(43) Veröffentlichungstag der Anmeldung: **20.07.2005**
(21) Anmeldenummer: 04000963.1
(22) Anmeldetag: 19.01.2004
(51) Int. Cl.: G06F 3/033

(54) **Verfahren zur Bildschirmdarstellung von Programmsteuerelementen und/oder Texten**

(71) Anmelder: Siemens Aktiengesellschaft, 80333 München (DE)
(72) Erfinder: Moser, Markus T., 8055 Graz (AT)
(74) Vertreter: Berg, Peter, Dipl.-Ing.

(57) **Zusammenfassung**

Es wird ein Verfahren zur Bildschirmdarstellung von Programmsteuerelementen und/oder Texten, bei dem zweite Programmsteuerelemente und/oder Texte (A, B, C), welche mit einer durch erste Programmsteuerelemente und/oder Texte (K1..K4) gebildete Gruppe keinen funktionellen Zusammenhang haben, ebenfalls in einen dieser Gruppe zugeordneten Bildschirmbereich eingefügt werden. In einer besonderen Ausführungsform wird das erfindungsgemäße Verfahren auf eine Bildlaufleiste angewandt, bei der zweite Programmsteuerelemente und/oder Texte (A, B, C) derart in den Bewegungsbereich eines Schiebers (SB) eingefügt werden, dass sie diesen in seiner Bewegung nicht behindern.

## Beschreibung

Verfahren zur Bildschirmdarstellung von Programmsteuerelementen und/oder Texten.

Die Erfindung betrifft ein Verfahren zur Bildschirmdarstellung von Programmsteuerelementen und/oder Texten, wobei erste Programmsteuerelemente und/oder Texte in eine funktionale Gruppe zusammengefasst und in einem dieser Gruppe zugeordneten Bildschirmbereich angezeigt werden.

Bei Programmen mit einer graphischen Benutzeroberfläche werden Programmsteuerelemente und/oder Texte in der Regel zu funktionalen Gruppen zusammengefasst und einem zugeordneten Bildschirmbereich angezeigt. Als Beispiel wird exemplarisch die Textverarbeitungssoftware "Word" der Firma Microsoft angeführt, bei der in einer Standardeinstellung am oberen Rand eine Titelleiste, daran anschließend eine Menüleiste sowie mehrere Symbolleisten und am unteren Rand eine Statuszeile angeordnet sind. Weiterhin finden sich am unteren Rand eine horizontale, am rechten Rand eine vertikale Bildlaufleiste. Die umfangreichen Funktionen sind dabei in bekannter Weise in logische Einheiten zusammengefasst, um einem Benutzer die Bedienung des Programms so einfach als möglich zu machen.

Abhängig von der Größe der logischen Einheit oder funktionalen Gruppe schrumpft der Arbeitsbereich für eigentliche Aufgabe des Programms, in "Word" somit das Textfenster. Da die Programmsteuerelemente und/oder Texte, welche jeweils funktional zusammengefasst werden, nicht automatisch eine Bildschirmbreite oder -höhe beanspruchen, bleibt in der Regel ein Teil des Bildschirmbereichs ungenutzt.

Es wird an dieser Stelle darauf hingewiesen, dass die Textverarbeitungssoftware "Word" nur ein Beispiel des umfangreichen Angebots an Software darstellt, bei der die genannten Tatsachen zutreffen. Der breite Anwendungsbereich der Erfindung soll durch die Nennung des Beispiels daher in keiner Weise eingeschränkt werden.

Der Erfindung liegt nun die Aufgabe zugrunde, ein Verfahren zur Bildschirmdarstellung von Programmsteuerelementen und/oder Texten anzugeben, bei dem die graphische Benutzeroberfläche besser ausgenützt wird.

Dies geschieht erfindungsgemäß mit einem Verfahren der eingangs genannten Art, bei dem zweite Programmsteuerelemente und/oder Texte, welche mit der durch die ersten Programmsteuerelemente und/oder Texte gebildete Gruppe keinen funktionellen Zusammenhang haben, ebenfalls in den dieser Gruppe zugeordneten Bildschirmbereich eingefügt werden.

Auf diese Weise kann mehr Information als bisher auf einem Bildschirm dargestellt werden, ohne dass hierzu der eigentliche Arbeitsbereich verkleinert werden müsste, in welchem Texte oder bildliche Darstellungen ohnehin bisweilen nur sehr klein angezeigt werden. Bei CAD-Anwendungen beispielsweise muss deswegen häufig in einen Bereich einer technischen Zeichnung "gezoomt" werden, um auch Konstruktionsdetails erkennen zu können. Das erfindungsgemäße Verfahren kann diese Zoomen zwar nicht zur Gänze ersetzen, aber doch die Häufigkeit dieses Vorgangs herabsetzen.

Vorteilhaft ist es,
- wenn als funktionale Gruppe eine Bildlaufleiste vorgesehen wird, welche einen Schieber umfasst,
- wenn zweite Programmsteuerelemente und/oder Texte in dem für den Schieber vorgesehenen Bewegungsbereich angeordnet werden und
- wenn die Bildschirmpositionen dieser zweiten Programmsteuerelemente und/oder Texte innerhalb dieses Bewegungsbereichs bei einer Bewegung des Schiebers derart verändert werden, dass der Schieber in seiner Bewegung nicht behindert wird oder der Schieber die zweiten Programmsteuerelemente und/oder Texte teilweise verdeckt.

Die Bildlaufleiste stellt einen Bildschirmbereich dar, der aufgrund der Bewegungsfreiheit des enthaltenen Schiebers, teilweise ungenutzt ist. Erfindungsgemäß werden nun Programmsteuerelemente und/oder Texte derart in den Bewegungsbereich des Schiebers eingefügt, dass sie diesen in seiner Bewegung nicht behindern. Dies kann einerseits dadurch erreicht werden, dass die Positionen der eingefügten Elemente entsprechend der Stellung des Schiebers verändert werden oder aber der Schieber einen Teil der eingefügten Elemente überdeckt und sozusagen darüber hinweggleitet.

Besonders vorteilhaft ist es dabei weiterhin,
- wenn als zweite Texte Seitenzahlen eines Dokuments vorgesehen sind und
- wenn diese Seitenzahlen in dem für den Schieber vorgesehenen Bewegungsbereich derart angeordnet werden, dass bei Positionierung des Schiebers über einer Seitenzahl die entsprechende Seite des Dokuments angezeigt wird.

Mit dieser Variante der Erfindung wird das sogenannte "Scrollen" erleichtert. Hierzu werden in den bisher leeren Bewegungsbereich des Schiebers die Seitenzahlen eines angezeigten Dokuments eingefügt. Je nach Länge des Dokuments kann dabei etwa auch nur jede fünfte oder zehnte Seitenzahl angezeigt werden. Wird der Schieber nun oberhalb einer Seitenzahl positioniert, so wird die entsprechende Seite des Dokuments angezeigt. Werden nicht alle Seitenzahlen dargestellt, so wird im Zwischenraum in bekannter Weise linear interpoliert.

Besonders vorteilhaft ist es weiterhin,
- wenn als zweite Programmsteuerelemente Seitenzahlen eines Dokuments vorgesehen sind, welche in dem für den Schieber vorgesehenen Bewegungsbereich angeordnet werden, und
- wenn bei einer Aktivierung eines Programmsteuerelements der Schieber an die Position des Programmsteuerelements verschoben und die entsprechende Seite des Dokuments angezeigt wird.

Hierbei werden die Seitenzahlen nicht nur in Textform angezeigt sondern sind auch mit einer Funktion hinterlegt, sodass bei einem Mausklick auf eine Seite der Schieber an die entsprechende Stelle positioniert und die gewünschte Seite des Dokuments angezeigt wird

In gleicher Weise wie für Seitenzahlen kann die Erfindung auch für Indizes eines Dokuments genutzt werden. Dabei werden etwa Kapitelnummern, die Buchstaben des Alphabets, wenn das Dokument beispielsweise ein Lexikon beinhaltet, oder dergleichen in dem für den Schieber vorgesehenen Bewegungsbereich angeordnet. Wird der Schieber nun oberhalb eines Index positioniert oder der Index mit einem Mausklick aktiviert, so wird die entsprechende Seite des Dokuments angezeigt.

Schließlich kann die Erfindung auch in analoger Weise für Verweise auf Dokumente, sogenannte "Hyperlinks", genutzt werden. Dabei werden direkt die Verweise, die Abkürzungen der Dokumentnamen oder aber auch andere Identifikationen in dem für den Schieber vorgesehenen Bewegungsbereich angeordnet. Wird der Schieber nun oberhalb eines Verweises positioniert oder der Verweis mit einem Mausklick aktiviert, so wird das entsprechende Dokument geöffnet.

Die Aufgabe der Erfindung wird auch mit einem Computerprogrammprodukt gelöst, dessen Inhalt, wenn er in den Arbeitsspeicher eines Computers geladen wird, zur Durchführung aller Schritte des erfindungsgemäßen Verfahrens bestimmt ist.

Die beim erfindungsgemäßen Verfahren genannten Ausführungsformen und Vorteile gelten dabei in gleicher Weise für das erfindungsgemäße Computerprogrammprodukt.

Die Erfindung wird anhand eines in den Figuren dargestellten Ausführungsbeispiels näher erläutert, welches verschiedene Anordnungen von zusätzlichen Programmsteuerelementen oder Texten in einer Bildlaufleiste nach dem Stand der Technik betrifft.

Es zeigen:
- Figur 1:: eine Bildlaufleiste nach dem Stand der Technik;
- Figur 2a:: wie Figur 1 nur mit zweiten Programmsteuerelementen A, B und C;
- Figur 2b:: wie Figur 2a nur mit anderer Stellung des Schiebers SB;
- Figur 3a:: wie Figur 1 nur mit einem zusätzlichen Textfeld;
- Figur 3b:: wie Figur 3a nur mit anderer Stellung des Schiebers SB;
- Figur 4a:: wie Figur 1 nur mit zusätzlichen Seitenzahlen 1..12 eines Dokuments;
- Figur 4b:: wie Figur 4a nur mit anderer Stellung des Schiebers SB.

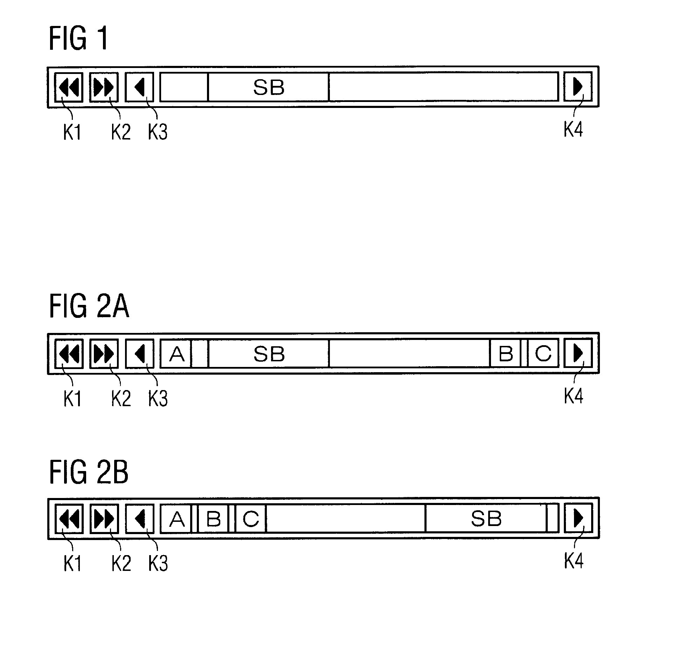

Figur 1 zeigt eine Bildlaufleiste nach dem Stand der Technik, so wie sie etwa innerhalb des Betriebssystems Microsoft Windows verwendet wird. Die Bildlaufleiste umfasst dabei erste Programmsteuerelemente K1..K4, im folgenden "Bildlaufschaltflächen" genannt, sowie einen Schieber SB und einen ihm zugeordneten Bewegungsbereich. Die erste Bildlaufschaltfläche ist dabei für den schnellen Rücklauf, die zweite Bildlaufschaltfläche K2 für den schnellen Vorlauf, die dritte Bildlaufschaltfläche K3 für langsamen Rücklauf und die vierte Bildlaufschaltfläche K4 für langsamen Vorlauf vorgesehen. In bekannter Weise wird die Bildlaufleiste auch in vertikaler Lage beziehungsweise auch mit veränderten Schaltflächen verwendet, wenngleich in den folgenden Figuren stets die horizontale Lage dargestellt ist.

Figur 2a zeigt nun eine erste Ausführungsform des erfindungsgemäßen Verfahrens, wobei in die Bildlaufleiste gemäß Figur 1 zweite Programmsteuerelemente A, B und C, im folgenden "Programmstart-Schaltflächen" genannt, eingefügt sind. Die erste Programmstart-Schaltfläche A sei für den Start eines ersten Programms, die zweite Programmstart-Schaltfläche B für den Start eines zweiten Programms und schließlich die dritte Programmstart-Schaltfläche C für den Start eines dritten Programms vorgesehen. Der Schieber SB befindet sich in der Figur 2a im linken Abschnitt des Bewegungsbereiches. Daher ist die erste Programmstart-Schaltfläche A ganz links, die zweite und dritte Programmstart-Schaltfläche B und C ganz rechts im Bewegungsbereich des Schiebers SB angeordnet.

Wird nun der Schieber SB wie in Figur 2b dargestellt in den rechten Abschnitt des Bewegungsbereiches verschoben, so werden die Positionen der zweiten und dritten Programmstart-Schaltfläche B und C derart verändert, dass der Schieber SB in seiner Bewegung nicht behindert wird. Die zweite und dritte Programmstart-Schaltfläche B und C werden daher ebenfalls ganz links im Bewegungsbereich des Schiebers SB angeordnet.

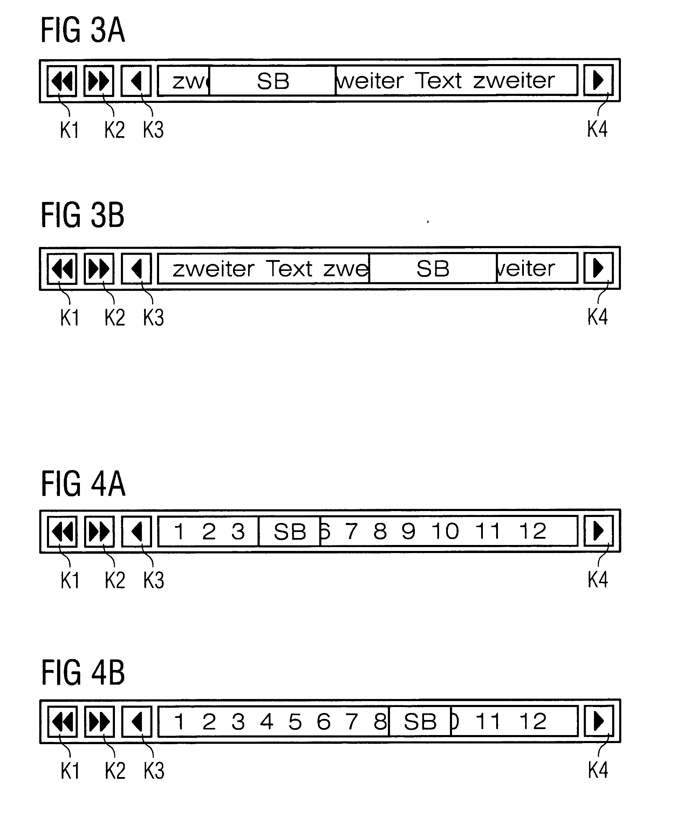

Figur 3a zeigt die Bildlaufleiste gemäß Figur 1, bei der zusätzlich ein Textfeld im Bewegungsbereich des Schiebers SB angeordnet ist. Der Einfachheit halber wird angenommen, dass der zweite Text "zweiter Text" laufend wiederholt wird. Leicht erkennbar ist, dass ein Teil des zweiten Textes durch den Schieber SB, der sich in Figur 3a im linken Abschnitt des Bewegungsbereiches befindet, verdeckt wird. In Figur 3b wurde der Schieber SB in den rechten Abschnitt des Bewegungsbereiches verschoben. Dem entsprechend wird ein anderer Teil des zweiten Textes verdeckt. Da es sich in einer besonderen Ausführungsform der Erfindung ohnehin um einen Lauftext, also einen längeren Text handelt, der sozusagen über den Bildschirm gezogen wird, hat die genannte Abdeckung in der Praxis kaum Auswirkungen. Im Falle eines statischen Textes kann dieser natürlich auch unterbrochen werden, sodass der zweite Text rechts vom Schieber SB an der Stelle fortgesetzt wird, an der er links vom Schieber SB unterbrochen wurde. Denkbar ist auch, dass der Schieber SB zumindest teilweise transparent ist, sodass der darunter liegende Text hindurchscheint. In der Praxis wird dazu der überdeckte Teil eines beispielsweise schwarz geschriebenen Textes lediglich grau dargestellt.

Figur 4a zeigt nun eine dritte Ausführungsform des erfindungsgemäßen Verfahrens. Dabei werden Seitenzahlen 1..12 eines Dokuments im Bewegungsbereich des Schiebers SB angeordnet, derart, dass bei Positionierung des Schiebers SB über einer Seitenzahl die entsprechende Seite des Dokuments angezeigt wird. Das bedeutet, dass in Figur 4a die Seite 5 angezeigt wird. Figur 4b zeigt den Schieber SB wiederum im rechten Abschnitt des Bewegungsbereiches. Dem zufolge wird hier die Seite 9 des Dokuments angezeigt. In der Darstellung werden die gerade angezeigten Seiten durch den Schieber SB verdeckt. Dies ist nicht in jedem Fall von Vorteil, sodass auch transparente oder halbtransparente Ausführungen des Schiebers SB eingesetzt werden können. In einer weiteren vorteilhaften Ausführungsform wird der Schieber SB bei einem Mausklick auf eine Seitenzahl 1..12 auch automatisch an die entsprechende Stelle positioniert. Gleichzeitig wird natürlich auch die zugeordnete Seite im Dokument angezeigt.

Wie bereits ausgeführt, kann die Erfindung auch auf Indizes eines Dokuments und Verweise auf Dokumente angewendet werden. Die genannten Beispiele beziehen sich daher ausdrücklich auch auf diese Anwendungsfälle, wobei als zweite Texte oder zweite Programmsteuerelemente Indizes oder Verweise vorgesehen werden. Bei Mausklick auf ein Programmsteuerelement, welches mit einem Verweis auf ein Dokument unterlegt ist, wird daher beispielsweise das entsprechende Dokument geöffnet.

Um den Bereich, in dem ein bestimmtes Programmsteuerelement aktiv ist, besser zu kennzeichnen, können die verschiedenen Bereiche auch farblich unterschiedlich gestaltet werden. Beispielsweise können so gerade Seitenzahlen auf hellgrauem, ungerade dagegen auf dunkelgrauem Hintergrund dargestellt werden. Auf diese Weise ist für den Benutzer ein Mausklick auf ein gewünschtes Programmsteuerelement beziehungsweise in den diesem zugeordneten Bereich leichter möglich.

## Patentansprüche

1. Verfahren zur Bildschirmdarstellung von Programmsteuerelementen und/oder Texten,
- wobei erste Programmsteuerelemente (K1..K4) und/oder Texte in eine funktionale Gruppe zusammengefasst und in einem dieser Gruppe zugeordneten Bildschirmbereich angezeigt werden,
**dadurch gekennzeichnet,**
- **dass** zweite Programmsteuerelemente (A, B, C) und/oder Texte, welche mit dieser Gruppe keinen funktionellen Zusammenhang haben, ebenfalls in diesen Bildschirmbereich eingefügt werden.

2. Verfahren nach Anspruch 1, **dadurch gekennzeich**- **net,**
- dass als funktionale Gruppe eine Bildlaufleiste vorgesehen wird, welche einen Schieber (SB) umfasst,
- dass zweite Programmsteuerelemente (A, B, C) und/oder Texte in dem für den Schieber (SB) vorgesehenen Bewegungsbereich angeordnet werden und
- dass die Bildschirmpositionen dieser zweiten Programmsteuerelemente (A, B, C) und/oder Texte innerhalb dieses Bewegungsbereichs bei einer Bewegung des Schiebers (SB) derart verändert werden, dass der Schieber (SB) in seiner Bewegung nicht behindert wird oder der Schieber (SB) die zweiten Programmsteuerelemente (A, B, C) und/oder Texte teilweise verdeckt.

3. Verfahren nach Anspruch 2, **dadurch gekennzeich- net**,
- dass als zweite Texte Seitenzahlen (1..12) eines Dokuments vorgesehen sind und
- dass diese Seitenzahlen (1..12) in dem für den Schieber (SB) vorgesehenen Bewegungsbereich derart angeordnet werden, dass bei Positionierung des Schiebers (SB) über einer Seitenzahl (1..12) die entsprechende Seite des Dokuments angezeigt wird.

4. Verfahren nach Anspruch 2, **dadurch gekennzeich- net,**
- dass als zweite Programmsteuerelemente Seitenzahlen (1..12) eines Dokuments vorgesehen sind, welche in dem für den Schieber (SB) vorgesehenen Bewegungsbereich angeordnet werden, und
- dass bei einer Aktivierung eines Programmsteuerelements der Schieber (SB) an die Position des Programmsteuerelements verschoben und die entsprechende Seite des Dokuments angezeigt wird.

5. Verfahren nach Anspruch 2, **dadurch gekennzeich- net,**
- dass als zweite Texte Indizes eines Dokuments vorgesehen sind und
- dass diese Indizes in dem für den Schieber (SB) vorgesehenen Bewegungsbereich derart angeordnet werden, dass bei Positionierung des Schiebers (SB) über einem Index die entsprechende Stelle des Dokuments angezeigt wird.

6. Verfahren nach Anspruch 2, **dadurch gekennich- net,**
- dass als zweite Programmsteuerelemente Indizes eines Dokuments vorgesehen sind, welche in dem für den Schieber (SB) vorgesehenen Bewegungsbereich angeordnet werden, und
- dass bei einer Aktivierung eines Programmsteuerelements der Schieber (SB) an die Position des Programmsteuerelements verschoben und die entsprechende Stelle des Dokuments angezeigt wird.

7. Verfahren nach Anspruch 2, **dadurch gekennzeich- net,**
- dass als zweite Texte Verweise auf Dokumente vorgesehen sind und
- dass diese Verweise in dem für den Schieber (SB) vorgesehenen Bewegungsbereich derart angeordnet werden, dass bei Positionierung des Schiebers (SB) über einem Verweis das entsprechende Dokument geöffnet wird.

8. Verfahren nach Anspruch 2, **dadurch gekennzeich- net,**
- dass als zweite Programmsteuerelemente Verweise auf Dokumente vorgesehen sind, welche in dem für den Schieber (SB) vorgesehenen Bewegungsbereich angeordnet werden, und
- dass bei einer Aktivierung eines Programmsteuerelements der Schieber (SB) an die Position des Programmsteuerelements verschoben und das entsprechende Dokument geöffnet wird.

9. Computerprogrammprodukt, dessen Inhalt, wenn er in den Arbeitsspeicher eines Computers geladen wird, zur Durchführung aller Schritte eines Verfahrens nach einem der Ansprüche 1 bis 8 bestimmt ist.
